# EUROPEAN PATENT SPECIFICATION

(11) **EP 4 493 863 B1**
(45) Date of publication and mention of the grant of the patent: **18.11.2026**
(21) Application number: 23709982.5
(22) Date of filing: 07.03.2023
(51) Int. Cl.: F24H 4/02, F24H 9/02, F24H 9/06, F16B 21/07, F16B 21/08

(54) **HEATING DEVICE COMPRISING A FIXING ASSEMBLY**
HEIZVORRICHTUNG MIT EINER BEFESTIGUNGSANORDNUNG
DISPOSITIF DE CHAUFFAGE COMPRENANT UN ENSEMBLE DE FIXATION

(30) Priority: 14.03.2022 EP 22161873; 21.03.2022 EP 22163167; 21.03.2022 EP 22163164; 01.04.2022 EP 22166330; 01.04.2022 EP 22166331; 01.04.2022 EP 22166332; 06.12.2022 EP 22211748
(43) Date of publication of application: 22.01.2025
(73) Proprietor: BDR Thermea Group B.V., 7332 BD Apeldoorn (NL)
(72) Inventor: KIEFFER, Damien, 7332 BD Apeldoorn (NL); CHASSAGNARD, Benjamin, 7332 BD Apeldoorn (NL); ANTOINE, Florian, 7332 BD Apeldoorn (NL)
(74) Representative: Grabovac, Dalibor
(86) International application number: PCT/EP2023/055642
(87) International publication number: WO 2023/174741

(56) References cited:
- EP-B1- 3 252 393
- DE-A1- 3 408 856
- US-A1- 2015 075 482
- US-A1- 2021 190 114

## Description

The invention relates to a heating device, in particular a heat water pump, comprising a fixing assembly.

US 2015/075482A1 describes an engine cover with moulded attachment members to secure the cover in place.

US 2021/190114A1 describes a series of grommet arrangements, all exhibiting varying degrees of rotational symmetry, for attaching a soundproof cover for an engine.

DE 3408856A1 describes an inexpensive cover and casing arrangement for a hot water boiler including a cover plate with cup shaped bulges arranged to interact with cup shaped indentations in an upper section.

EP3252393B1 describes a housing for the air space of a heat pump, with reversible low-flow air guide that can be slid in and out of the housing on either the left- or righthand side of the housing to direct air flow appropriately, and in doing so fills a 'dead space' on a non-aerated side, thereby reducing turbulence and consequently noise. Parts of the housing to be joined are provided with a rib and mating groove joint.

To produce large-scale parts, several materials are available. In particular, steel, wood, plastic, foam, etc., can be taken into account. One of the materials widely used in the domestic equipment industry, and particularly in the field of heat pumps and thermal comfort, is plastic. Plastic is chosen because of its suitability for a variety of purposes: weight, cost, mechanical and chemical resistance to ambient environments, scalability, etc.

There are different processes for making plastic parts: injection, extrusion, expansion, blowing, etc. However, the choice of the production method and the plastic material generate constraints in terms of design in order to make the part feasible.

Until now, plastic parts made in the thermal comfort industry were mainly made of injected or expanded plastics. Examples of injected plastic parts are ABS (Acrylonitrile butadiene styrene), PP (Polypropylene), PS (Polystyrene), PA (polyamide) etc. For expanded plastic parts, EPS (expanded polystyrene) is preferred.

The use of expanded polystyrene makes it possible to produce very light, inexpensive, large, insulating parts with large differences in material width. These characteristics are particularly interesting for creating ducts, covers or parts for the assembly of other components. However, expanded polystyrene requires large draft angles which limit the technical functions that can be handled by the part. In engineering, draft is the amount of taper for molded or cast parts perpendicular to the parting line. Indeed, the EPS part is expanded in a mold, composed of at least two parts (core and cavity). When opening the mold and allowing the part to come out, no face of the part should interact with any surface of the mold. To achieve this, the surfaces of the part are at an angle to the perpendicular of the closing plane of the mold.

Due to certain mechanical characteristics, some plastics are compatible with undercuts. This is the case for expanded polypropylene (EPP). This material shares the same main characteristics than EPS but is also suitable for higher temperature than EPS.

With the use of expanded polypropylene, new assembly solutions without additional parts have emerged. These include the use of grooves and slots with no or only undercuts. In this way, the parts are joined together in a forceful manner, ensuring that the parts are joined together and relatively tight.

However, assembly is often unsatisfactory and/or difficult because the tolerances of the EPP parts are large and there may therefore be interference or large clearances during assembly using this method. This type of defect can lead to the breakage of parts or make it impossible to fulfil the desired functions (mechanical strength of the assembled parts, air or water tightness in particular).

As EPP material is interesting to be used as a conduit or as an assembly or structural part for thermal comfort products, technical optimizations have been designed to facilitate their use. This is the aim of this invention.

It is therefore desirable to obtain a fixing assembly that is efficient as well as cost effective, especially for the connection of structural parts for thermal comfort products, where a mechanical strength and air or water tightness are required.

The object is solved by a heating device, in particular a heat pump water heater, comprising a first component, a second component connected to the first component by a fixing assembly comprising at least a fixing point, the fixing point having a protuberance comprising a protuberance base, the protuberance extending outwards from a first component surface of the first component and a corresponding recess extending inwards from a second component surface of the second component, wherein the protuberance is inserted in a removable way into the corresponding recess so that the first component is connected to the second component, wherein in at least a portion of the protuberance and of the recess, the cross-section of the protuberance and of the recess first increases and then decreases, and wherein at least the first component and/or the second component comprises a rib and groove system without undercuts, and a rib of the rib and groove system is joined with the protuberance base.

Advantageously, due to this specific geometry of the fixing point, i.e., of the protuberance and the corresponding recess, that is characterized, at least in a portion, by an undercut, an efficient and easy connection is established between two components, thereby ensuring air and/or water tightness.

Moreover, the fixing assembly comprises fixing points instead of, for example, fixing ribs. This ensures that the two components to be connected are guided in a way that clearances during assembly are strongly reduced or avoided and that the components are less prone to breakage or assembly difficulties.

For ease of explanation, the protuberance can be referred to as a male attachment point, whereas the recess can be referred to as a female attachment point. The connection between two components or parts can only be made between male and female fixing points that are put together.

In one example, the form of the protuberance fits the form of the recess, wherein the protuberance can for example the form of a solid of revolution, in particular a spherical shape, a conical shape, a bowl shape, or any other geometry, such as a pyramid shape. In general, the protuberance preferably has a section decreasing from the top of the protuberance to an intermediate plane of the protuberance, in order to have a guide to introduce the protuberance in the recess.

According to an embodiment, both the protuberance and the recess have a bowl-shape. This means that in the direction from the base to the top of the protuberance the value of the cross -section first decreases, then increases and then decreases again. The first decrease of the cross-section at the base of the protuberance has the advantage of avoiding a concentration of stress on the protuberance and therefore reduces, preferably avoids, a weakness of the protuberance which could lead to breakage. Furthermore, this configuration facilitates the production and makes the injection molding of the part more robust. The first decrease at the base can also be described as a chamfer or fillet. The recess is formed complementary to the protuberance.

In particular, the protuberance has a geometry that facilitates its insertion into the recess.

The protuberance is specifically designed in such a way that the cross-section increases from the entrance of the fixing point to an intermediate plane. It is clear that the recess is desigend in a complementar way for receiving the protuberance.

In another example, the protuberance has a protuberance lower portion extending from the protuberance base to a protuberance intermediate section and a protuberance upper portion extending from the protuberance intermediate section to a protuberance top and the recess has a recess lower portion extending from a recess base to a recess intermediate section and a recess upper portion extending from the recess intermediate section to a recess top, wherein the recess lower portion is longer than or equal to the protuberance lower portion.

In this way, it is ensured that the surfaces to be joined are properly supported. Preferably, the length of the protuberance lower portion is strictly less than the length of the recess lower portion. In this way, the part bearing the male attachment point tends to impose a force on the part bearing the female attachment point, bringing them together and ensuring a good seal.

In a further example, in the protuberance lower portion and in the recess lower portion the cross-section first increases and then decreases. This is especially associated with the particualry efficient shape of the protuberance that is a bowl shape. Thus, even if the inlet section of the male point is not the smallest, it still fulfils the desired function because the protrusion has an angle on the outer periphery which allows good sliding during assembly in the female point.

In an example, in the protuberance lower portion and in the recess lower portion the difference between the maximum value of cross-section and the minimum value of cross-section is comprised between 1 mm and 10 mm. In other words, The fixing point, i.e., the protuberance and the recess, has an undercut such that the difference between the point with the largest cross-section and the point with the smallest cross-section is up to 10 mm. In particular, to ensure a good fit, this difference is at least 1 mm.

In an additional example, the difference between the value of cross-section at the recess intermediate section and the value of cross-section at the protuberance intermediate section is greater than or equal to 0. In particular, in order to allow the two components to fit together properly and to be compatible with the tolerances of the component, the cross-section of the widest area of the female point is at least as wide as that of the associated male point.

In order to ensure mechanical stress, in another example, the maximum value of cross-section of the protuberance is greater than the minimum value of cross section of the recess in the recess lower portion.

In a further example, the length of the recess lower portion is equal to the length of the protuberance lower portion, when the maximum value of cross-section of the recess is greater than the maximum value of cross-section of the protuberance. Alternatively, the length of the recess lower portion is greater than the length of the protuberance lower portion, when the maximum value of cross-section of the recess is equal to the maximum value of cross-section of the protuberance. In this way, an efficient connection between the male point and the corresponding female point is ensured.

In an example, the fixing point is made of expanded plastic, in particular expanded polypropylene or expanded polystyrene. The use of this material, in particular the expanded polypropylene allows the formation of specific geometries with undercuts, as defined above. For example, the male attachment point can have a zone during which its cross-section decreases between an intermediate plane and the end of the protuberance. This reduction in cross-section is made possible by the properties of the materials and the processes that allow undercuts. In this way, the components can be joined together in a forceful manner, ensuring that these components are joined together and relatively tight.

In an additional example, the assembly comprises a plurality of localized fixing points, wherein at least a protuberance and/or a recess is in the first component and at least a protuberance and/or a recess is in the second component. In other words, the same component can have both male and female attachment points. In contrast to existing solutions, the fixing points are localized points and not lines or large areas. This limits the impact of manufacturing tolerances of the molded parts. This also makes it easier to assemble the parts together because the guidance of the parts is limited to small areas. This also limits the possible material breakage that can occur during regular assembly/disassembly of the parts. The localized protuberances thus have shapes that allow them to fit together around their entire periphery. This characteristic is not fulfilled or is of little interest if it is carried out on a long groove (length/width ratio > 10).

In another aspect of the invention, an assembling apparatus is provided. The apparatus comprises a first component, a second component to be connected to the first component, and an inventive fixing assembly, wherein the fixing assembly comprises at least a fixing point, the fixing point having a protuberance extending outwards of a first component surface of the first component and a corresponding recess extending inwards of a second component surface of the second component and the protuberance is insertable in a removable way into the corresponding recess so that the first component is connectable to the second component. The fixing assembly can be integrated into the first and second components. In other words, at least a protuberance of the fixing point can be integrated in the first component and at least a corresponding recess of the fixing point can be integrated in the second component. Advantageously, the first and second components can be made of the same material of the fixing assembly, i.e. of the fixing points. In particular, they can be made of expanded plastic, in particular expanded polypropylene or expanded polystyrene.

Each component of the two components to be connected can have male or female points or both. A component can have both male and female points for assemble with only one component of several components. A plurality of fixing points can be present on the component to ensure a good hold and to eliminate degrees of freedom, especially of rotation. Preferably, the component can have at least three fixing points. A component may have different geometries and/or dimensions of fixing points. Thus, these act as a locator and ensure that the correct pair of components has been matched or the component is correctly positioned.

According to the invention, at least the first component and/or the second component comprises a rib and groove system without undercuts. In this way, it is possible to ensure the functions of guiding the assembly and holding the components together. In particular, according to the invention a rib of the rib and groove system is joined with a protuberance base. This allows the protuberance to be stiffened and sealed in this junction area. The ribs and grooves improve the sealing of the assembly between the components. The fact that no undercut is used on the groove/rib system avoids breakage of the components or difficulties in engagement or withdrawal. Furthermore, the combination of ribs with the fixing assembly here described makes it possible to create a junction zone between the rib and the male attachment point which tends to stiffen the fixing points. In order for the system to be effective, it is necessary that when the components are assembled, the first element encountered is the defined fixing assembly and not the groove/rib system.

In the figures, the subject-matter of the invention is schematically shown, wherein identical or similarly acting elements are usually provided with the same reference signs.
- Figure 1: shows a schematic representation of the fixing assembly according to an example.
- Figures 2A-C: show a schematic representation of the protuberance and the recess according to an example.
- Figures 3A-B: show a schematic representations of protuberances and recesses according to different examples.
- Figures 4A-B: show a schematic representation of an assembling apparatus according to an example.
- Figures 5A-C: show a schematic representation of a combination of a rib and groove system with the fixing assembly according to an example (Fig. 5A-5B) and of an assembling apparatus according to another example (Fig. 5C).

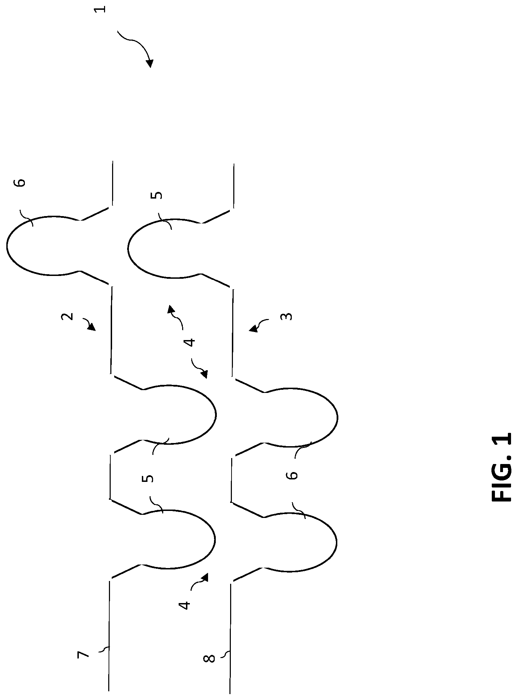

Figure 1 illustrates a fixing assembly 1 according to an example. The fixing assembly 1 is used to connect a first component 2 to a second component 3. these two components 2, 3 can be the parts of a heat pump or other thermal comfort devices. Specifically, the two components 2, 3 can be made of plastic foam such as cap elements, covers, ducts, wall structures, etc..

The fixing assembly comprises one or more fixing points 4. Figure 1 schematically illustrates only three fixing points 4. Each fixing point 4 comprises a protuberance 5, or male attaching point, and a corresponding recess 6, or female attaching point. According to the figure, two protuberances 5 are part of the first component 2 and one protuberance is part of the second component 4 so that two corresponding recesses 6 are part of the second component 3 and a corresponding recess 6 is part of the first component 2. The sequence of protuberances 5 and recesses 6 in the same component are illustrates in figure 1 only as an example. Of course, different sequences can be considered, for example an alternating sequence of a first protuberance 5 formed in the first component 2 (and the corresponding first recess 6 in the second component 3), a second protuberance 5 successive to the first protuberance 5 formed in the second component 3 (and the corresponding second recess 6 in the first component 2), a third protuberance 5 successive to the second protuberance 5 formed in the first component 2 (and the corresponding third recess 6 in the second component 3), and so on. The first protuberance 5 on the left extends outwardly from a first component surface 7 and the corresponding recess 6 extends inwardly from a second component surface 8. The first protuberance 5 on the right extends outwardly from a second component surface 8 and the corresponding recess 6 extends inwardly from a first component surface 7. The form of the protuberance 5 fits the form of the recess 6 so that the protuberance 5 can be inserted into the recess 6 in a removable way. It is noted that the fact that the protuberance 5 fits the recess 6 does not necessarily mean that the dimensions of the protuberance 5, i.e., the length, the width at particular cross-section points, etc., are exactly identical to the corresponding dimensions of the recess 6. On the other hand, as will be explained in more detail describing the following figures, there are slight differences in the dimensions in order to increase the mechanical strength and/or to facilitate the insertion of the protuberance 5 into the recess 6.

Figure 1 shows a two-dimensional representation of the fixing point 4. However, the protuberance 5 should be intended as a solid of revolution and the recess 6 should be intended as a cavity of a solid of revolution. The protuberance 5 can also be different from a solid of revolution, such as a pyramidal shape with square base (not shown in figure 1). In at least a portion, the cross-section of the protuberance 5 and of the recess 6 first increases and then decreases. As shown in the figure, this portion is located at about an intermediate section of the protuberance 5 and/or recess 6, thereby giving to the protuberance 5 (at least in part) the shape of an ellipsoid or an egg-shape. This particular geometry can be easily ensured by manufacturing the fixing points 4 - and of course the entire components 2, 3 if the fixing points are integrated into the components 2, 3 - using a particular expanded plastic foam, such as EPP.

For connecting the first component 2 to the second component 3, each protuberance 5 is inserted into the corresponding recess 6 so that one or more fixing points 4 are arranged along a connection region between the two components 2, 3.

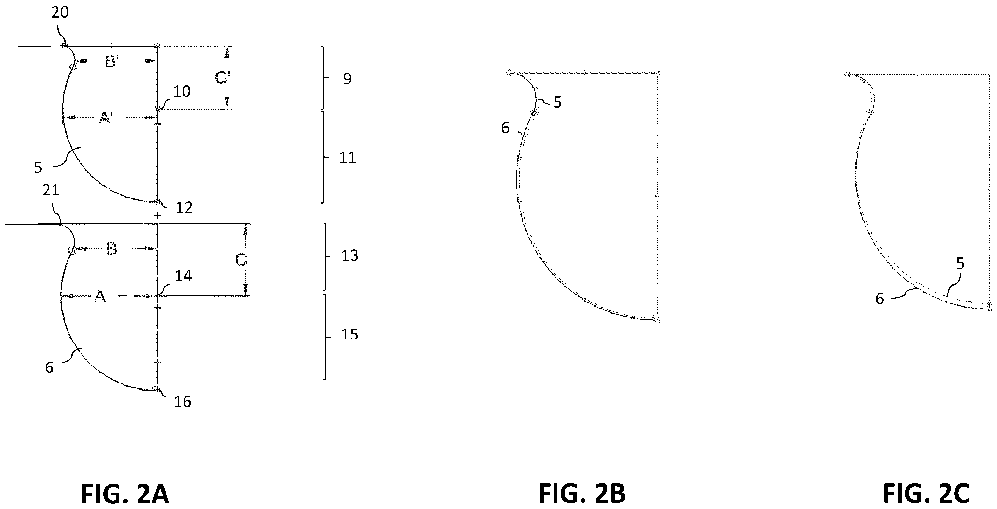

Figure 2A describes the longitudinal cross-section cut in half of the protuberance 5 and the corresponding recess 6. Both the protuberance 5 and the recess 6 have a bowl-shape. This means that in the direction from the base to the top of the protuberance 5 the value of the cross -section first decreases, then increases and then decreases again. The first decrease of the cross-section at the base of the protuberance 5 has the advantage of avoiding a concentration of stress on the protuberance 5 and therefore reduces, preferably avoids, a weakness of the protuberance 5 which could lead to breakage. Furthermore, this configuration facilitates the production and makes the injection molding of the part more robust. The recess 6 is formed complementary to the protuberance 5. The protuberance 5 is defined by a protuberance lower portion 9 extending from the protuberance base 20, corresponding for example to the first component surface 7, to a protuberance intermediate section 10. The length of the protuberance lower portion 9 is indicated in the figure as C'. The protuberance 5 is also defined by a protuberance upper portion 11 extending from the protuberance intermediate section 10 a protuberance top 12. In a similar way, the recess 6 is defined by a recess lower portion 13 extending from the recess base 21, corresponding for example to the second component surface 8, to a recess intermediate section 14. The length of the recess lower portion 13 is indicated in the figure as C. The recess 6 is also defined by a recess upper portion 15 extending from the recess intermediate section 14 to a recess top 16. To ensure that the surfaces of the components 2, 3 to be joined are properly supported, it is important that C' is less than or equal to C. It is preferable that C' be strictly less than C. In this way, the component 2 bearing the protuberance 5 tends to impose a force on the component 3 bearing the recess 6, bringing them together and ensuring a good seal. The largest cross-section of the protuberance 5 and of the recess 6 are denoted in the figure as A' and A, respectively, whereas the smallest cross-section of the protuberance 5 and of the recess 6 in the corresponding lower portions 9, 13, are denoted in the figure as B' and B, respectively. In order to allow the components 2, 3 to fit together properly and to be compatible with the tolerances of the component, A ≥ A'. In addition, to ensure a good mechanical strength, A' > B.

Figures 2B and 2C show two alternative configurations for obtaining and efficient connection between the two components 2, 3. In particular, figure 2B shows a configuration wherein the maximum value of cross-section of the recess 6 is greater than the maximum value of cross-section of the protuberance 5, i.e., A>A', and the fixing point 4 is designed such that the length of the recess lower portion 13 is equal to the length of the protuberance lower portion 9, i.e., C=C'. This is illustrated in figure 2B showing an assembly of the protuberance 5 (light grey line) and a recess 6 (dark line). Figure 2B shows that the protrusion and recess are designed with the same geometry and length C and C' of the respective lower portion 13 and 9. The cross-section A' of the protuberance 5 is smaller than the corresponding cross-section A of the recess 6 to ensure a good fit. In other words, the protuberance 5 and recess 6 of figure 2B fulfill the requirement C=C' and A>A'.

Figure 2C shows a configuration wherein the maximum value of the cross-section of the recess 6 is equal to the maximum value of cross-section of the protuberance 5, i.e., A=A'. The fixing point 4 is designed such that the length of the recess lower portion 13 is greater than the length of the protuberance lower portion 9, i.e. C>C'. This is illustrated in figure 2C showing an assembly of the protuberance 5 (light grey line) and a recess 6 (dark line).The configuration of figure 2C is another embodiment that further improves the seal between the parts due to a pressure that is maintained between the parts as a result of fulfilling the condition C'<C. This configuration can be realized with A=A' or A>A'. It is shown here with A=A' to ensure a high force and thus an enhanced seal.

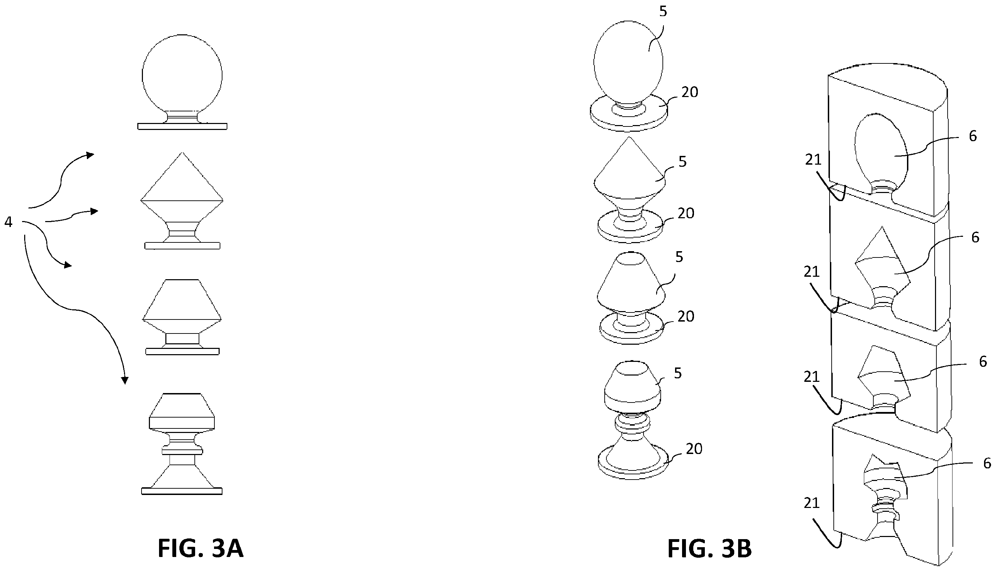

Figure 3A shows the alternative two-dimensional shapes of fixing points 4. As shown in the figure, the fixing point 4 can have the shape of a sphere, a pyramid, a trenched pyramid or a combination of different geometrical structures. It is noted that all these examples have at least an undercut structure that can be easily obtainable using for example EPP as material. It is noted that this figure illustrates only protuberances 5 with geometries of revolution. However, it is noted that are geometries can be considered that are not of revolution as long as the shapes fulfil the conditions defined in the application.

Figure 3B shoes the protuberance 5 and the corresponding recess 6 for each of the shapes of fixing points 4 of figure 3A. It is noted that each protuberance 5 has a protuberance base 20 that can correspond to a part of the first component surface 7 or the second component surface 8. Similarly, each recess 6 has a recess base 21 that can correspond to a part of the first component surface 7 or the second component surface 8.

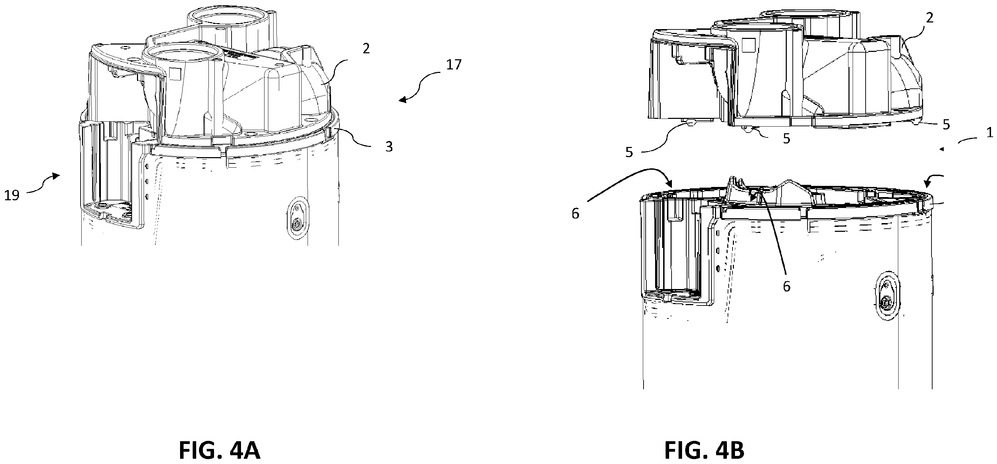

Figures 4A and 4B illustrate an assembling apparatus 17 for a heating device 19. In particular, the apparatus 17 comprises a first component 2, for example a cover or a cap element and a second component 3, for example a base element or junction element. In an assembled configuration (Fig. 4A), the first component 2 is connected to the second component 2 using the fixing assembly 1 as described above. In the disassembled configuration (Fig. 4B), the first component 2 is removed from the second component 3. It is noted that the fixing assembly 1 comprises at least three fixing points 4 including three protuberance 5 provided in the first component 2 and three recesses 6 provided in the second component 3. The presence of these three fixing points 4 allows an efficient connection that is air and water tight. Also, based on the arrangement of the fixing points 4, it is ensured that the first component 2 is always correctly positioned on the second component 3. The position and shape of the recesses 6 and protuberances 5 of the two parts allows only one possible assembly. This reduces the risk of assembling the parts upside down or of misconnecting the two parts (poka-yoke). The same part can have different shapes of protuberance 5 and recess 6 and/or have both protuberances 5 and recesses 6 and/or have a different center distance between the different protuberances 5 and recesses 6.

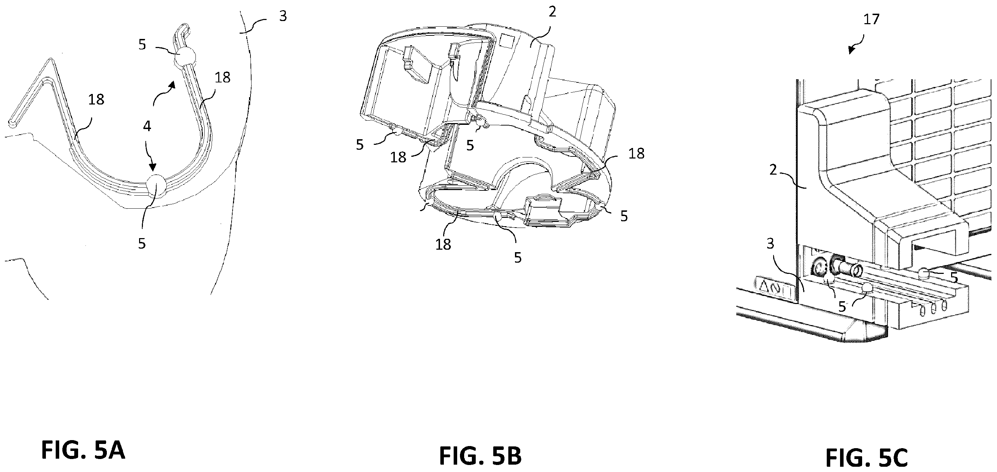

Figures 5A and 5B show a further implementation of the assembling apparatus 17. The fixing assembly 4 is coupled to a rib and groove system 18 without undercuts in order to maintain the quality of the sealing function while improving the assembly. It is noted that the rib and groove system 18 can have different shapes and that the fixing points 4 can be arranged along the path defined by said rib and groove system 18. Figures 5A and 5B only show spherical protuberances 5. However, it is clear that a coupling with corresponding recesses 6 is also possible or that on the same path of the rib and groove system 18 are present both protuberances 5 and recesses 6. Figure 5A shows the application of the rib and groove system 18 coupled with the fixing assembly 1 on a generic component (i.e. second component 3) or on a specific component 2 of a heating device 19 as described in figures 4A-4B.

Figure 5C shows the application of the assembling apparatus, and particularly of a fixing assembly 1 with spherical protuberances 5 with undercuts for another device,

### Reference Signs

- 1: Fixing assembly
- 2: First component
- 3: Second component
- 4: Fixing point
- 5: Protuberance
- 6: Recess
- 7: First component surface
- 8: Second component surface
- 9: Protuberance lower portion
- 10: Protuberance intermediate section
- 11: Protuberance upper portion
- 12: Protuberance top
- 13: Recess lower portion
- 14: Recess intermediate section
- 15: Recess upper portion
- 16: Recess top
- 17: Assembling apparatus
- 18: Rib and groove system
- 19: Heating device
- 20: Protuberance base
- 21: Recess base

## Claims

1. Heating device (19), in particular a heat pump water heater, comprising:
- a first component (2);
- a second component (3) connected to the first component (1) by a
- a fixing assembly (1) comprising at least a fixing point (4), and wherein the fixing point (4) comprises:
- a protuberance (5) comprising a protuberance base (20), the protuberance extending outwards from a first component surface (7) of the first component (2) and
- a corresponding recess (6) extending inwards from a second component surface (8) of the second component (3), and wherein
- the protuberance (5) inserted in a removable way into said corresponding recess (6) so that the first component (2) is connected to the second component (3),
- wherein in at least a portion of the protuberance (5) and of the recess (6), the cross-section of the protuberance (5) and of the recess (6) first increases and then decreases, and wherein at least the first component (2) and/or the second component (3) comprises a rib and groove system (18) without undercuts, and
- a rib of the rib and groove system (18) is joined with the protuberance base (20).

2. Heating device (19) according to claim 1, **characterized in that** the form of the protuberance (5) fits the form of the recess (6),
(a) wherein the protuberance (5) has the form of a solid of revolution, in particular a spherical shape, a conical shape, pyramidal shape, or a bowl shape
(b) wherein the form of protuberance (5) has a section decreasing from the top of the protuberance (5) to an intermediate plane of the protuberance (5).

3. Heating device (19) according to claim 1 or 2, **characterized in that** the protuberance (5) has a protuberance lower portion (9) extending from a protuberance base (20) to a protuberance intermediate section (10) and a protuberance upper portion (11) extending from the protuberance intermediate section (10) to a protuberance top (12) and the recess (6) has a recess lower portion (13) extending from a recess base (21) to a recess intermediate section (14) and a recess upper portion (15) extending from the recess intermediate section (14) to a recess top (16), wherein the recess lower portion (13) is longer than or equal to the protuberance lower portion (9).

4. Heating device (19) according to claim 3, **characterized in that** in the protuberance lower portion (9) and in the recess lower portion (13) the cross-section first increases and then decreases.

5. Heating device (19) according to any claim from 3 to 4, **characterized in that** in the protuberance lower portion (9) and in the recess lower portion (13) the difference between the maximum value of cross-section and the minimum value of cross-section is comprised between 1 mm and 10 mm.

6. Heating device (19) according to any claim from 3 to 5, **characterized in that** the difference between the value of cross-section at the recess intermediate section (14) and the value of cross-section at the protuberance intermediate section (10) is greater than or equal to 0.

7. Heating device (19) according to any claim from 3 to 6, **characterized in that** the maximum value of cross-section of the protuberance (5) is greater than the minimum value of cross section of the recess (6) in the recess lower portion (13).

8. Heating device (19) according to any claim from 3 to 7, **characterized in that** the length of the recess lower portion (13) is equal to the length of the protuberance lower portion (9), when the maximum value of cross-section of the recess (6) is greater than the maximum value of cross-section of the protuberance (5).

9. Heating device (19) according to any claim from 3 to 7, **characterized in that** the length of the recess lower portion (13) is greater than the length of the protuberance lower portion (9), when the maximum value of cross-section of the recess (6) is equal to the maximum value of cross-section of the protuberance (5).

10. Heating device (19) according to any claim from 1 to 9, **characterized in that** the fixing point (4) is made of expanded plastic, in particular expanded polypropylene or expanded polystyrene.

11. Heating device (19) according to any claim from 1 to 10, **characterized in that** the fixing assembly (1) comprises a plurality of localized fixing points (4), wherein at least a protuberance (5) and/or a recess (6) is in the first component (2) and at least a protuberance (5) and/or a recess (6) is in the second component (3).

## Patentansprüche

1. Heizvorrichtung (19), insbesondere ein Warmwasserbereiter mit Wärmepumpe, umfassend:
- eine erste Komponente (2);
- eine zweite Komponente (3), die mit der ersten Komponente (1) verbunden ist durch
- eine Befestigungsanordnung (1), die mindestens einen Befestigungspunkt (4) umfasst, und wobei der Befestigungspunkt (4) umfasst:
- einen Vorsprung (5), der eine Vorsprungsbasis (20) umfasst, wobei sich der Vorsprung von einer ersten Komponentenoberfläche (7) der ersten Komponente (2) nach außen erstreckt, und
- eine entsprechende Aussparung (6), die sich von einer zweiten Komponentenoberfläche (8) der zweiten Komponente (3) nach innen erstreckt, und wobei
- der Vorsprung (5) in einer lösbaren Weise in die entsprechende Aussparung (6) eingesetzt ist, sodass die erste Komponente (2) mit der zweiten Komponente (3) verbunden ist,
- wobei in mindestens einem Abschnitt des Vorsprungs (5) und der Aussparung (6) der Querschnitt des Vorsprungs (5) und der Aussparung (6) zuerst zunimmt und dann abnimmt, und wobei mindestens die erste Komponente (2) und/oder die zweite Komponente (3) ein Rippen- und Nutsystem (18) ohne Hinterschneidungen umfasst, und
- eine Rippe des Rippen- und Nutsystems (18) mit der Vorsprungsbasis (20) verbunden ist.

2. Heizvorrichtung (19) nach Anspruch 1, **dadurch gekennzeichnet, dass** die Form des Vorsprungs (5) der Form der Aussparung (6) entspricht,
(a) wobei der Vorsprung (5) die Form eines Rotationskörpers aufweist, insbesondere eine Kugelform, eine Kegelform, eine Pyramidenform oder eine Schalenform,
(b) wobei die Form des Vorsprungs (5) einen Schnitt aufweist, der von der Oberseite des Vorsprungs (5) zu einer Zwischenebene des Vorsprungs (5) abnimmt.

3. Heizvorrichtung (19) nach Anspruch 1 oder 2, **dadurch gekennzeichnet, dass** der Vorsprung (5) einen unteren Vorsprungsabschnitt (9), der sich von einer Vorsprungsbasis (20) zu einem Vorsprungszwischenabschnitt (10) erstreckt, und einen oberen Vorsprungsabschnitt (11) aufweist, der sich vom Vorsprungszwischenabschnitt (10) zu einer Vorsprungsoberseite (12) erstreckt, und die Aussparung (6) einen unteren Aussparungsabschnitt (13), der sich von einer Aussparungsbasis (21) zu einem Aussparungszwischenabschnitt (14) erstreckt, und einen oberen Aussparungsabschnitt (15) aufweist, der sich vom Aussparungszwischenabschnitt (14) zu einer Aussparungsoberseite (16) erstreckt, wobei der untere Aussparungsabschnitt (13) länger oder gleich dem unteren Vorsprungsabschnitt (9) ist.

4. Heizvorrichtung (19) nach Anspruch 3, **dadurch gekennzeichnet, dass** im unteren Vorsprungsabschnitt (9) und im unteren Aussparungsabschnitt (13) der Querschnitt zuerst zunimmt und dann abnimmt.

5. Heizvorrichtung (19) nach einem der Ansprüche 3 bis 4, **dadurch gekennzeichnet, dass** im unteren Vorsprungsabschnitt (9) und im unteren Aussparungsabschnitt (13) die Differenz zwischen dem Maximalwert des Querschnitts und dem Minimalwert des Querschnitts zwischen 1 mm und 10 mm liegt.

6. Heizvorrichtung (19) nach einem der Ansprüche 3 bis 5, **dadurch gekennzeichnet, dass** die Differenz zwischen dem Wert des Querschnitts am Aussparungszwischenabschnitt (14) und dem Wert des Querschnitts am Vorsprungszwischenabschnitt (10) größer oder gleich 0 ist.

7. Heizvorrichtung (19) nach einem der Ansprüche 3 bis 6, **dadurch gekennzeichnet, dass** der Maximalwert des Querschnitts des Vorsprungs (5) größer ist als der Minimalwert des Querschnitts der Aussparung (6) im unteren Aussparungsabschnitt (13).

8. Heizvorrichtung (19) nach einem der Ansprüche 3 bis 7, **dadurch gekennzeichnet, dass** die Länge des unteren Aussparungsabschnitts (13) gleich der Länge des unteren Vorsprungsabschnitts (9) ist, wenn der Maximalwert des Querschnitts der Aussparung (6) größer ist als der Maximalwert des Querschnitts des Vorsprungs (5).

9. Heizvorrichtung (19) nach einem der Ansprüche 3 bis 7, **dadurch gekennzeichnet, dass** die Länge des unteren Aussparungsabschnitts (13) größer als die Länge des unteren Vorsprungsabschnitts (9) ist, wenn der Maximalwert des Querschnitts der Aussparung (6) gleich dem Maximalwert des Querschnitts des Vorsprungs (5) ist.

10. Heizvorrichtung (19) nach einem der Ansprüche 1 bis 9, **dadurch gekennzeichnet, dass** der Befestigungspunkt (4) aus expandiertem Kunststoff, insbesondere expandiertem Polypropylen oder expandiertem Polystyrol, hergestellt ist.

11. Heizvorrichtung (19) nach einem der Ansprüche 1 bis 10, **dadurch gekennzeichnet, dass** die Befestigungsanordnung (1) eine Vielzahl von lokalisierten Befestigungspunkten (4) umfasst, wobei sich mindestens ein Vorsprung (5) und/oder eine Aussparung (6) in der ersten Komponente (2) befindet und sich mindestens ein Vorsprung (5) und/oder eine Aussparung (6) in der zweiten Komponente (3) befindet.

## Revendications

1. Dispositif de chauffage (19), en particulier chauffe-eau à pompe à chaleur, comprenant :
- un premier composant (2) ;
- un second composant (3) relié au premier composant (1) par
- un ensemble de fixation (1) comprenant au moins un point de fixation (4), et dans lequel le point de fixation (4) comprend :
- une protubérance (5) comprenant une base (20) de protubérance, la protubérance s'étendant vers l'extérieur à partir d'une première surface de composant (7) du premier composant (2) et
- un évidement (6) correspondant s'étendant vers l'intérieur à partir d'une seconde surface de composant (8) du second composant (3), et dans lequel
- la protubérance (5) insérée de manière amovible dans ledit évidement (6) correspondant, de sorte que le premier composant (2) soit relié au second composant (3),
- dans lequel, dans au moins une portion de la protubérance (5) et de l'évidement (6), la section transversale de la protubérance (5) et de l'évidement (6) augmente d'abord puis diminue, et dans lequel au moins le premier composant (2) et/ou le second composant (3) comprend un système de nervures et de rainures (18) sans contre-dépouilles, et
- une nervure du système de nervures et de rainures (18) est jointe à la base de protubérance (20).

2. Dispositif de chauffage (19) selon la revendication 1, **caractérisé en ce que** la forme de la protubérance (5) correspond à la forme de l'évidement (6),
(a) dans lequel la protubérance (5) présente la forme d'un solide de révolution, notamment une forme sphérique, une forme conique, une forme pyramidale ou une forme de bol
(b) dans lequel la forme de la protubérance (5) présente une section décroissante du sommet de la protubérance (5) vers un plan intermédiaire de la protubérance (5).

3. Dispositif de chauffage (19) selon la revendication 1 ou 2, **caractérisé en ce que** la protubérance (5) comporte une portion inférieure (9) de protubérance s'étendant d'une base (20) de protubérance vers une section intermédiaire (10) de protubérance et une portion supérieure (11) de protubérance s'étendant de la section intermédiaire (10) de protubérance vers un sommet (12) de protubérance, et **en ce que** l'évidement (6) comporte une portion inférieure (13) d'évidement s'étendant d'une base (21) d'évidement vers une section intermédiaire (14) d'évidement et une portion supérieure (15) d'évidement s'étendant de la section intermédiaire (14) d'évidement vers un sommet (16) d'évidement, dans lequel la portion inférieure (13) d'évidement est plus longue que la portion inférieure (9) de protubérance ou égale à celle-ci.

4. Dispositif de chauffage (19) selon la revendication 3, **caractérisé en ce que**, dans la portion inférieure (9) de protubérance et dans la portion inférieure (13) d'évidement, la section transversale augmente d'abord puis diminue.

5. Dispositif de chauffage (19) selon l'une quelconque des revendications 3 à 4, **caractérisé en ce que**, dans la portion inférieure (9) de protubérance et dans la portion inférieure (13) d'évidement, la différence entre la valeur maximale de la section transversale et la valeur minimale de la section transversale est comprise entre 1 mm et 10 mm.

6. Dispositif de chauffage (19) selon l'une quelconque des revendications 3 à 5, **caractérisé en ce que** la différence entre la valeur de la section transversale au niveau de la section intermédiaire (14) d'évidement et la valeur de la section transversale au niveau de la section intermédiaire (10) de protubérance est supérieure ou égale à 0.

7. Dispositif de chauffage (19) selon l'une quelconque des revendications 3 à 6, **caractérisé en ce que** la valeur maximale de la section transversale de la protubérance (5) est supérieure à la valeur minimale de la section transversale de l'évidement (6) dans la portion inférieure (13) d'évidement.

8. Dispositif de chauffage (19) selon l'une quelconque des revendications 3 à 7, **caractérisé en ce que** la longueur de la portion inférieure (13) d'évidement est égale à la longueur de la portion inférieure (9) de protubérance, lorsque la valeur maximale de la section transversale de l'évidement (6) est supérieure à la valeur maximale de la section transversale de la protubérance (5).

9. Dispositif de chauffage (19) selon l'une quelconque des revendications 3 à 7, **caractérisé en ce que** la longueur de la portion inférieure (13) d'évidement est supérieure à la longueur de la portion inférieure (9) de protubérance, lorsque la valeur maximale de la section transversale de l'évidement (6) est égale à la valeur maximale de la section transversale de la protubérance (5).

10. Dispositif de chauffage (19) selon l'une quelconque des revendications 1 à 9, **caractérisé en ce que** le point de fixation (4) est constitué de plastique expansé, en particulier de polypropylène expansé ou de polystyrène expansé.

11. Dispositif de chauffage (19) selon l'une quelconque des revendications 1 à 10, **caractérisé en ce que** l'ensemble de fixation (1) comprend une pluralité de points de fixation (4) localisés, dans lequel au moins une protubérance (5) et/ou un évidement (6) se trouve dans le premier composant (2) et au moins une protubérance (5) et/ou un évidement (6) se trouve dans le second composant (3).
